# EUROPÄISCHE PATENTANMELDUNG

(11) **EP 1 691 423 A2**
(43) Veröffentlichungstag der Anmeldung: **16.08.2006**
(21) Anmeldenummer: 05015312.1
(22) Anmeldetag: 14.07.2005
(51) Int. Cl.: H01L 31/042, F24J 2/54

(54) **Gestell zur Lagerung von Solarmodulen**

(30) Priorität: 14.02.2005 DE 202005002411 U
(71) Anmelder: a & f Stahl- und Maschinenbau GmbH, 97076 Würzburg (DE)
(72) Erfinder: Petsch, Thomas, 97082 Würzburg (DE); Rüthlein, Reimund, 97258 Oberickelsheim (DE)
(74) Vertreter: von den Steinen, Axel

(57) **Zusammenfassung**

Die Erfindung betrifft ein Gestell (01) zur Lagerung von Solarmodulen (04), mit einem bodenfest montierbaren Unterteil (06) und einem drehbar auf dem Unterteil (06) gelagerten Oberteil (05), auf dessen Oberseite die Solarmodule (04) befestigt sind und das in Abhängigkeit vom relativen Sonnenstand im Tagesverlauf rotatorisch nachführbar ist. Zwischen Oberteil (05) und Unterteil (06) ist eine Antriebseinrichtung vorgesehen, mit der das Oberteil (05) rotatorisch antreibbar ist. Die Antriebseinrichtung umfasst eine am Unterteil (06) oder am Oberteil gespannte Antriebskette (08), und am Oberteil (05) oder am Unterteil ist ein Antriebsmotor (12, 13) vorgesehen, der mit der Antriebskette (08) derart in Eingriff steht, dass durch Antrieb des Antriebsmotors (12, 13) das Oberteil (05) rotatorisch angetrieben wird.

## Beschreibung

Die Erfindung betrifft ein Gestell zur Lagerung von Solarmodulen nach dem Oberbegriff des Anspruchs 1.

Gattungsgemäße Gestelle werden zur Lagerung von Solarmodulen eingesetzt, wobei mit den Solarmodulen die vom Sonnenlicht auf die Erdoberfläche einstrahlende Energie aufgefangen wird. Bei den Solarmodulen kann es sich dabei vorzugsweise um Photovoltaikmodule zur Erzeugung von elektrischer Energie handeln. Es sind aber auch andere Arten von Solarmodulen denkbar, beispielsweise zur Erzeugung von Heißwasser. Die Nachführung der Modulflächen in Abhängigkeit vom relativen Sonnenstand im Verlaufe eines Tages ermöglicht eine deutlich höhere Leistungsausbeute im Vergleich zu starr ausgerichteten Trägersystemen, da die Solarmodule durch die Nachführung in einem jeweils optimalen Winkel zur Einstrahlrichtung ausgerichtet werden.

Um die Nachführbarkeit der Solarmodule zu realisieren, sind bei gattungsgemäßen Gestellen ein Oberteil und ein Unterteil vorgesehen, wobei das Unterteil bodenfest im Untergrund verankert ist und das Oberteil drehbar auf dem Unterteil gelagert wird. Auf diese Weise kann das Oberteil mit den darauf befestigten Solarmodulen um die eigene vertikale Drehachse (Azimutachse) in Abhängigkeit vom relativen Sonnenstand gedreht werden. Zum Antrieb des Oberteils relativ zum Unterteil ist dabei eine Antriebseinrichtung vorgesehen, mit der das Oberteil rotatorisch antreibbar ist.

Bekannte Gestelle sind üblicherweise nur relativ klein ausgebildet und bieten wenig Nutzfläche zur Anbringung von Solarmodulen, da sie aufgrund ihrer Konstruktion nicht für die bei großen Nutzflächen auftretenden hohen Windlasten geeignet sind.

Ausgehend von diesem Stand der Technik ist es deshalb Aufgabe der vorliegenden Erfindung, ein neues Gestell vorzuschlagen, das insbesondere auch bei großen Modulflächen für hohe Windlasten geeignet ist.

Diese Aufgabe wird durch ein Gestell nach der Lehre des Anspruchs 1 gelöst.

Das erfindungsgemäße Gestell beruht auf dem Grundgedanken, dass zum Antrieb des Oberteils relativ zum Unterteil eine neuartige Antriebseinrichtung eingesetzt wird. Diese neue Antriebseinrichtung für Solarmodulgestelle umfasst eine Antriebskette, die entweder am Oberteil oder am Unterteil befestigt wird. Am jeweils gegenüberliegenden Teil des Gestells wird dann der Antriebsmotor befestigt, wobei der Antriebsmotor mit der Antriebskette derart in Eingriff steht, dass durch Antrieb des Antriebsmotors das Oberteil rotatorisch angetrieben werden kann. Durch den Einsatz einer Antriebskette zur Übertragung der Stellbewegungen des Antriebsmotors wird eine außerordentlich robuste Antriebseinrichtung geschaffen, mit der auch sehr hohe Windlasten sicher beherrscht werden können und ein unerwünschtes Verdrehen der Anlage aufgrund einer Windbelastung zuverlässig ausgeschlossen wird.

Zur Übertragung des Antriebsmoments vom Antriebsmotor auf die Antriebskette sollte an der Antriebswelle des Antriebsmotors vorzugsweise ein Kettenrad befestigt sein, das mit der Antriebskette formschlüssig in Eingriff steht. Aufgrund des Formschlusses zwischen Kettenrad und Antriebskette wird ein unerwünschter Schlupf zwischen Antriebskette und Kettenrad, wie er bei der reibschlüssigen Übertragung des Antriebsmoments vorkommen kann, zuverlässig ausgeschlossen.

Um ein Überspringen der Kettenglieder über die Eingriffskontur des Kettenrades zu verhindern, sollte der Umschlingungswinkel der Antriebskette am Kettenrad mindestens 180° betragen.

Zur Realisierung eines solchen Umschlingungswinkels von mehr als 180° können vor und/oder hinter dem Kettenrad Umlenkrollen vorgesehen sein, mit denen die Antriebskette an dem Kettenrad geführt wird.

Zur Fixierung des Oberteils des Gestells relativ zu dessen Unterteil kann an dem Gestell eine separate Bremseinrichtung vorgesehen sein. Alternativ dazu ist es jedoch auch denkbar, dass die Bremseinrichtung in den Antriebsmotor integriert ist. Diese in den Antriebsmotor integrierte Bremseinrichtung sollte dabei vorzugsweise in der Art einer stromlos betätigten Federbremse ausgebildet sein, die bei Stromausfall die gewünschte Bremswirkung aufbringt.

Um die Stellbewegungen des Antriebsmotors nachverfolgen zu können, sollte im Antriebsmotor ein Positionssensor, insbesondere ein Drehwinkelinkrementalgeber, integriert sein. Mit diesem Positionssensor kann die Stellbewegung des Antriebsmotors gemessen und an eine Steuerung weitergegeben werden.

Erfindungsgemäß ist es prinzipiell ohne Bedeutung, ob der Antriebsmotor am Oberteil oder am Unterteil befestigt ist. Da sich die Antriebskette jedoch in den meisten Anwendungsfällen leichter am Unterteil befestigen und spannen lässt, sollte der Antriebsmotor dementsprechend vorzugsweise am Oberteil befestigt sein. Zur Befestigung des Antriebsmotors kann dabei am Oberteil eine Konsole vorgesehen werden.

In welcher Art das Unterteil des Gestells konstruktiv ausgebildet ist, ist grundsätzlich beliebig. Besonders große Vorteile bietet es, wenn das Unterteil in der Art einer Rundlaufschiene mit vorzugsweise geschlossener Kontur ausgebildet ist. Eine solche Rundlaufschiene kann insbesondere aus gebogenen Kranschienen hergestellt werden. Die Rundlaufschiene weist dabei bevorzugt einen Durchmesser im Bereich von 5m bis 15m, insbesondere einen Durchmesser von ungefähr 12m, auf.

Zur drehbaren Lagerung des Oberteils am Unterteil können am Oberteil Radsätze befestigt werden. Diese Radsätze können an den Ecken eines rechteckigen Oberteils befestigt sein und auf diese Weise das Oberteil drehbar auf der das Unterteil bildenden Rundlaufschiene abstützen.

Bei Verwendung einer Rundlaufschiene als Untergestell sollte die Antriebskette vorzugsweise zwischen Schienenkopf und Schienenfuß an der Außenseite der Rundlaufschiene angeordnet sein. Auf diese Weise kann die Antriebskette in einfacher Weise gegen die Rundlaufschiene gespannt werden.

Da in den meisten Anwendungsfällen ein Totalumlauf des Gestells zur Nachführung der Solarmodule nicht notwendig ist, reicht es vielfach aus, wenn die Antriebskette das Untergestell nur mit einem Umschlingungswinkel von weniger als 360° umfasst. Vorzugsweise sollte die Antriebskette die Rundlaufschiene mit einem Umschlingungswinkel von ungefähr 220° umgreifen, weil der daraus resultierende Stellbereich des Oberteils relativ zum Unterteil zur Nachführung der Solarmodule in den meisten Fällen ausreicht.

Um die Antriebskette in einfacher Weise montieren und spannen zu können, sollten Kettenspannvorrichtungen vorgesehen sein, mit deren Betätigung die Spannung der Antriebskette veränderbar ist. Diese Kettenspannvorrichtungen können insbesondere an den Enden der Antriebskette vorgesehen werden. Die Kettenspannvorrichtungen selbst können beispielsweise im Fundament des Gestells befestigt sein.

Welche Art von Konstruktion für das Oberteil gewählt wird, ist grundsätzlich beliebig. Besonders einfach und kostengünstig kann das Oberteil als Tragwerk aus Stahlprofilen, vorzugsweise Hohlprofilen oder Strangprofilen, zusammengebaut werden.

Gattungsgemäße Gestelle müssen vielfach über weite Entfernungen transportiert werden, um sie vom Herstellungsort zum Einsatzort zu bringen. Es ist deshalb besonders vorteilhaft, wenn das Oberteil aus mehreren vormontierten Oberteilmodulen zusammensetzbar ist. Die Oberteilmodule können dann am Einsatzort durch Montage von geeigneten Montageverbindungen, beispielsweise Schraubverbindungen, zum Oberteil zusammengefügt werden.

Die Größe der einzelnen Oberteilmodule sollte dabei soweit begrenzt sein, dass jedes einzelne Oberteilmodul in einem Container oder auf der Ladefläche eines Lastkraftwagens transportierbar ist.

Zur Verankerung des Gestellunterteils auf dem Untergrund sollte vorzugsweise ein Betonfundament, beispielsweise aus vergossenem Ortbeton, vorgesehen sein. Zur Erhöhung der Stabilität des Betonfundaments können dabei Stahlelemente zur Armierung des Betonfundaments eingesetzt werden.

Die Solarmodule sollten vorzugsweise mit einem Neigungswinkel im Bereich von 15° bis 35°, insbesondere im Bereich von 20° bis 30°, auf dem Gestell montiert sein, um möglichst optimal auf die Sonneneinstrahlrichtung ausgerichtet zu sein.

Dabei ist es besonders vorteilhaft, wenn der Neigungswinkel der Solarmodule auf dem Oberteil veränderbar ist. Dazu ist es beispielsweise denkbar, dass das Oberteil seinerseits wiederum zweiteilig ausgebildet ist, wobei der die Solarmodule tragende Teil des Oberteils dann im Neigungswinkel verändert werden kann.

Durch Einsatz der erfindungsgemäßen Gestelle sind Anlagen denkbar, die eine Gesamtfläche von mehr als 100 m² Solarmodule ermöglichen. Insbesondere ist es denkbar, dass das Gestell Solarmodule mit einer Gesamtfläche von mehr als 200 m² trägt.

Um das Oberteil jeweils in Abhängigkeit vom Sonnenstand während des Tagesverlaufes ausrichten zu können, kann eine Steuerungseinrichtung vorgesehen sein, die den Antriebsmotor in Abhängigkeit der Signale einer Zeitmesseinrichtung, insbesondere einer Funkuhr, ansteuert.

Abhängig von der jeweils durch die Zeitmesseinrichtung gemeldete Tageszeit erhält der Antriebsmotor von der Steuerungseinrichtung Stellsignale, so dass das Oberteil relativ zum Unterteil entsprechend rotatorisch angetrieben wird. Damit kann eine exakte zeitabhängige Nachführung der Solarmodule in Abhängigkeit vom tageszeitabhängigen Sonnenstand gewährleistet werden.

Um die Relativposition zwischen Oberteil und Unterteil immer wieder neu kalibrieren zu können, können Sensoren, beispielsweise mechanische Endschalter, vorgesehen sein, mit denen die Relativstellung zwischen Oberteil und Unterteil in zumindest einer Winkelposition feststellbar ist. Bei Verwendung von mechanischen Endschaltern ist es beispielsweise denkbar, dass das Oberteil im Tagesverlauf zumindest einmal an einem solchen Endschalter vorbeigeführt wird. Da die Relativposition zwischen Oberteil und Unterteil beim Vorbeiführen des Oberteils am Endschalter bekannt ist, kann auf diese Weise das System immer wieder neu kalibriert werden.

Da erfindungsgemäße Gestelle für eine Lebensdauer von mindestens 20 Jahren ausgelegt werden, kommt dem Korrosionsschutz eine besondere Bedeutung zu. Die Bauteile des Gestells sollten deshalb vorzugsweise sandstrahlentrostet werden. Anschließend kann eine Vollverzinkung oder Feuerverzinkung als Korrosionsschutz angebracht werden. Die Vollverzinkung ist dabei beispielsweise mittels eines Tauchbades herstellbar.

Die Feuerverzinkung ist vorzugsweise bei geschlitzten Hohlprofilen zu deren Innenbeschichtung zu verwenden, wobei die Zinkschicht eine Trockenschichtstärke von mindestens 80 µm aufweisen sollte.

Eine Ausführungsform der Erfindung ist in den Zeichnungen schematisch dargestellt und wird nachfolgend beispielhaft erläutert.

### Es zeigen:

- **Fig. 1**: eine Anlage zur Erzeugung von Solarstrom in seitlicher Ansicht;
- **Fig. 2**: die Anlage gemäß **Fig. 1** in Ansicht von vorne;
- **Fig. 3**: die Anlage gemäß **Fig. 1** in Ansicht von hinten;
- **Fig. 4**: die Anlage gemäß **Fig. 1** in Ansicht von oben;
- **Fig. 5**: das Gestell der Anlage gemäß **Fig. 1** in Ansicht von oben;
- **Fig. 6**: einen vergrößerten Ausschnitt der Antriebseinrichtung der Anlage gemäß Fig. 1 in Ansicht von oben.

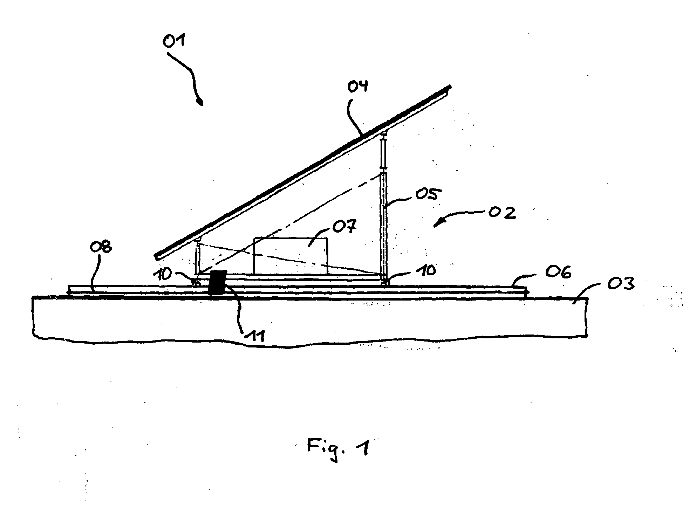

**In Fig. 1** ist eine Anlage 01 zur Erzeugung von Solarstrom in seitlicher Ansicht dargestellt. Auf einem Gestell 02, das auf einem Fundament 03 montiert ist, ist eine Vielzahl von Solarmodulen 04 in einem Neigungswinkel von 30° montiert. Die Solarmodule 04 sind dabei in der Art von Photovoltaikmodulen ausgebildet und können aus dem einstrahlenden Sonnenlicht elektrischen Strom erzeugen.

Um die Ausrichtung der Solarmodule 04 im Tagesverlauf in Abhängigkeit des Sonnenstandes verändern zu können, ist ein die Solarmodule 04 tragendes Oberteil 05 auf einem am Fundament 03 bodenfest verankerten Unterteil 06 drehbar gelagert. Die rotatorischen Stellbewegungen des Oberteils 05 relativ zum Unterteil 06 in Abhängigkeit vom jeweiligen Sonnenstand werden von einer elektrisch angetriebenen Antriebseinrichtung bewirkt. Die Steuerung zur Ansteuerung der Antriebseinrichtung ist in einem Gehäuse 07 untergebracht.

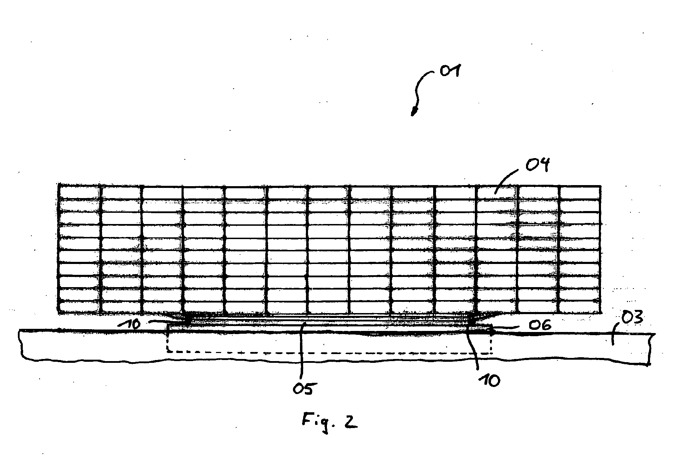

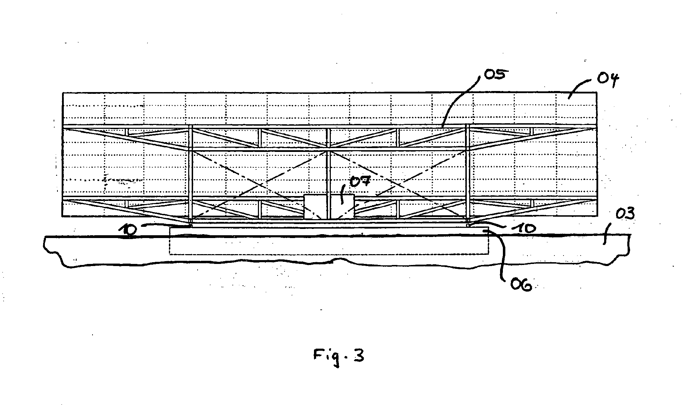

**Fig. 2 und Fig. 3** zeigen die Anlage 01 mit den Solarmodulen 04, dem Unterteil 06 und dem Oberteil 05 in Ansicht von vorne und in Ansicht von hinten. Die Anlage 01 weist dabei eine Nutzfläche der Solarmodule 04 von mehr als 200 m² auf. Wie insbesondere aus **Fig. 3** erkennbar, ist das Oberteil 05 in der Art einer Tragwerkskonstruktion aus Stahlprofilen hergestellt. Das Oberteil 05 kann dabei in mehrere Oberteilmodule zerlegt werden, um den Transport zu vereinfachen.

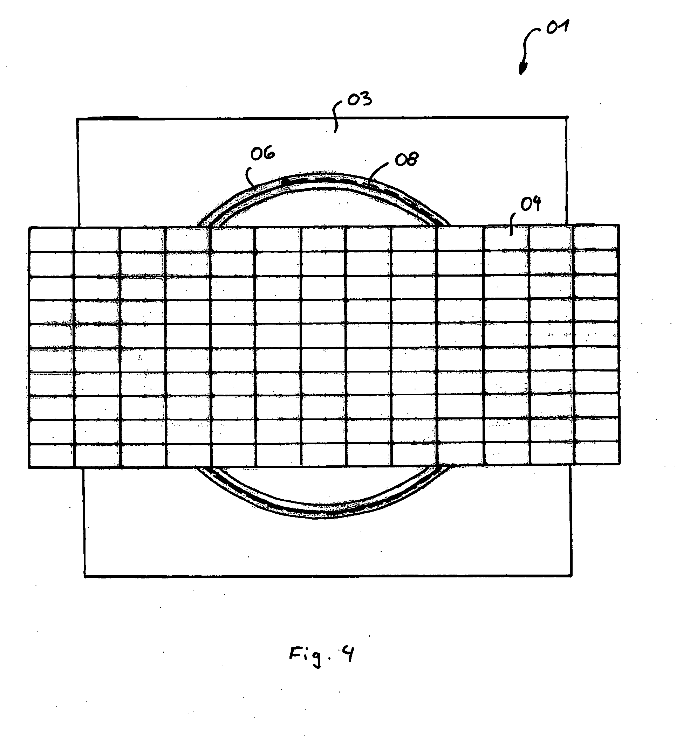

In **Fig. 4** ist die Anlage 01 in Ansicht von oben dargestellt. Man erkennt, dass als Unterteil 06 eine Rundlaufschiene Verwendung findet, wobei die Azimutachse 15 der Anlage 01 durch den Mittelpunkt dieser Rundlaufschiene 06 verläuft. An der Außenseite der als Unterteil 06 dienenden Rundlaufschiene ist eine Antriebskette 08 angeordnet, die mit an den Enden der Antriebskette 08 angeordneten Kettenspannvorrichtungen 09 gegen die Rundlaufschiene gespannt werden kann.

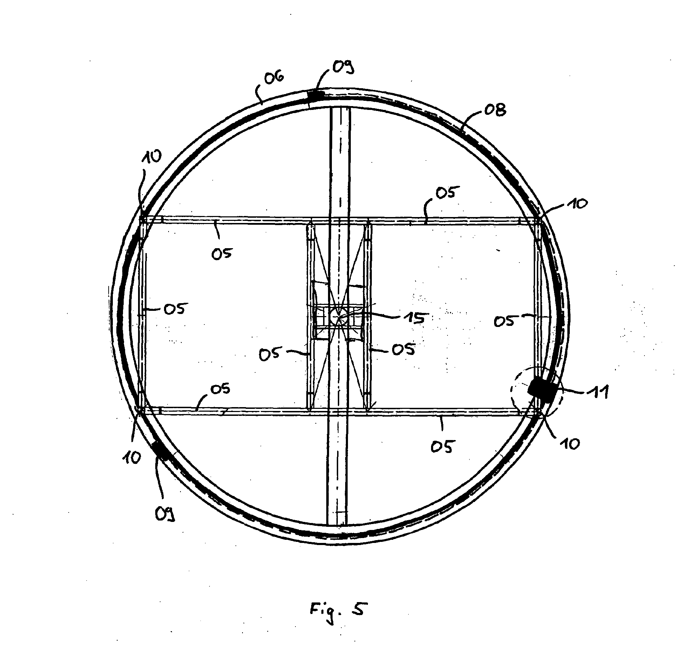

**Fig. 5** zeigt das Gestell 02 ohne die verdeckenden Solarmodule 04 in Ansicht von oben. An der Unterseite des Oberteils 05 in den von den Stahlprofilen gebildeten Ecken sind vier Radsätze 10 angebracht, die in **Fig. 5** lediglich verdeckt dargestellt sind. Mit den Radsätzen 10 stützt sich das Oberteil 05 drehbar auf der das Unterteil 06 bildenden Rundlaufschiene ab. Zum rotatorischen Antrieb des Oberteils 05 relativ zum Unterteil 06 dient ein auf einer Konsole 11 am Oberteil 05 befestigter Antriebsmotor, der in **Fig. 5** durch die Konsole 11 verdeckt dargestellt ist.

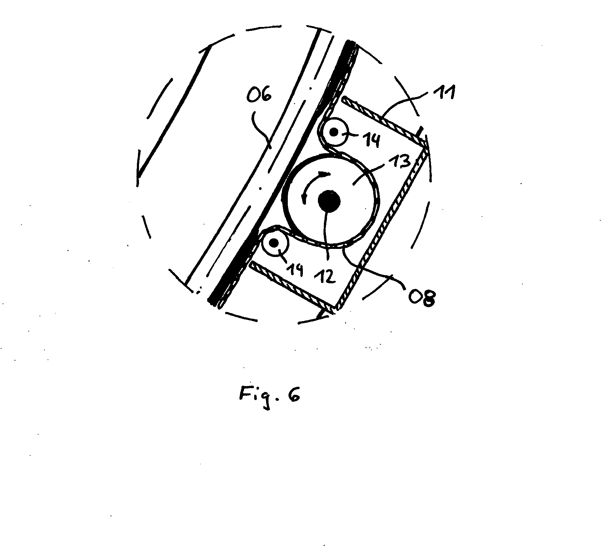

Der Eingriff zwischen der Antriebskette 08 und dem Antriebsmotor zur Übertragung der Stellbewegung ist in **Fig. 6** vergrößert dargestellt.

Die vom elektrischen Antrieb des Antriebsmotors erzeugte Stellbewegung wird auf eine Antriebswelle 12 übertragen, an deren Ende ein Kettenrad 13 drehfest befestigt ist. Durch Umlenkung an zwei Umlenkrollen 14 und 15 wird die Antriebskette 08 derart um das Kettenrad 13 geführt, dass sich ein Umschlingungswinkel von mehr als 180° ergibt. Das Kettenrad 13 steht dabei formschlüssig mit der Antriebskette 08 in Eingriff, so dass bei rotatorischem Antrieb des Kettenrades 13 die Kettenglieder der Antriebskette 08 am Kettenrad 13 vorbeigeführt werden. Auf diese Weise bewegt sich das Kettenrad 13 mit dem daran befestigten Antriebsmotor und dem daran befestigten Oberteil 05 relativ zum Unterteil 06 und bewirkt die gewünschte Stellbewegung zwischen Oberteil 05 und Unterteil 06.

Die Ansteuerung des Antriebsmotors erfolgt dabei mit einer speicherprogrammierten Steuerung, in der die Signale einer Funkuhr verarbeitet werden. Weiter werden in der Steuerung die Signale eines zwischen Getriebe und Antriebsmotor eingebauten Inkrementalgebers sowie von drei mechanischen Tastschaltern zur Kalibrierung der Relativstellung zwischen Oberteil 05 und Unterteil 06 verarbeitet. Die Steuerung steuert den Antriebsmotor dabei alle zehn Minuten an, um eine Minute lang auf der das Unterteil 06 bildenden Rundlaufschiene einen Weg von ca. 25 cm zurückzulegen und damit das Oberteil 05 in Abhängigkeit des Sonnenstandes nachzuführen.

## Patentansprüche

1. Gestell (01) zur Lagerung von Solarmodulen (04), mit einem bodenfest montierbaren Unterteil (06) und einem drehbar auf dem Unterteil (06) gelagerten Oberteil (05), auf dessen Oberseite die Solarmodule (04) befestigt sind und das in Abhängigkeit vom relativen Sonnenstand im Tagesverlauf rotatorisch nachführbar ist, wobei zwischen Oberteil (05) und Unterteil (06) eine Antriebseinrichtung vorgesehen ist, mit der das Oberteil (05) rotatorisch antreibbar ist,
**dadurch gekennzeichnet,**
**dass** die Antriebseinrichtung eine am Unterteil (06) oder am Oberteil gespannte Antriebskette (08) umfasst, wobei am Oberteil (05) oder am Unterteil ein Antriebsmotor (12, 13) vorgesehen ist, der mit der Antriebskette (08) derart in Eingriff steht, dass durch Antrieb des Antriebsmotors (12, 13) das Oberteil (05) rotatorisch angetrieben wird.

2. Gestell nach Anspruch 1,
**dadurch gekennzeichnet,**
**dass** die Antriebskette (08) mit einem an der Antriebswelle (12) des Antriebsmotors befestigten Kettenrad (13) formschlüssig in Eingriff steht.

3. Gestell nach Anspruch 2,
**dadurch gekennzeichnet,**
**dass** die Antriebskette (08) das Kettenrad (13) mit einem Umschlingungswinkel von mehr als 180° umgreift.

4. Gestell nach Anspruch 2 oder 3,
**dadurch gekennzeichnet,**
**dass** die Antriebskette (08) vor und/oder hinter dem Kettenrad (13) über eine Umlenkrolle (14) geführt ist.

5. Gestell nach einem der Ansprüche 1 bis 4,
**dadurch gekennzeichnet,**
**dass** der Antriebsmotor (12, 13) mittels einer Bremseinrichtung, insbesondere einer stromlos betätigten Federbremse, abgebremst und/oder fixiert werden kann.

6. Gestell nach einem der Ansprüche 1 bis 5,
**dadurch gekennzeichnet,**
**dass** im Antriebsmotor (12, 13) ein Positionssensor, insbesondere ein Drehwinkelinkrementalgeber, vorgesehen ist.

7. Gestell nach einem der Ansprüche 1 bis 6,
**dadurch gekennzeichnet,**
**dass** der Antriebsmotor (12, 13), insbesondere mittels einer Konsole (11), am Oberteil (05) befestigt ist.

8. Gestell nach einem der Ansprüche 1 bis 7,
**dadurch gekennzeichnet,**
**dass** das Unterteil (06) in der Art einer insbesondere geschlossenen Rundlaufschiene ausgebildet ist, insbesondere aus mehreren gebogenen Kranschienen besteht.

9. Gestell nach Anspruch 8,
**dadurch gekennzeichnet,**
**dass** die Rundlaufschiene (06) einen Durchmesser im Bereich von 5m bis 15m, insbesondere ungefähr 12m, aufweist.

10. Gestell nach Anspruch 8 oder 9,
**dadurch gekennzeichnet,**
**dass** an der Unterseite des Oberteils (05) vier Radsätze (10) angeordnet sind, mit denen sich das Oberteil (05) drehbar auf der Rundlaufschiene (06) abstützt.

11. Gestell nach einem der Ansprüche 8 bis 10,
**dadurch gekennzeichnet,**
**dass** die Antriebskette (08) zwischen Schienenkopf und Schienenfuß an der Außenseite der Rundlaufschiene (06) angeordnet ist.

12. Gestell nach einem der Ansprüche 8 bis 11,
**dadurch gekennzeichnet,**
**dass** die Antriebskette (08) die Rundlaufschiene (06) mit einem Umschlingungswinkel von ungefähr 220° umgreift.

13. Gestell nach einem der Ansprüche 1 bis 12,
**dadurch gekennzeichnet,**
**dass** an der Antriebskette (08), insbesondere an zumindest einem Ende der Antriebskette (08), eine Kettenspannvorrichtung (09) vorgesehen ist, durch deren Betätigung die Spannung der Antriebskette (08) veränderbar ist.

14. Gestell nach einem der Ansprüche 1 bis 13,
**dadurch gekennzeichnet,**
**dass** das Oberteil (05) in der Art eines Tragwerks aus Stahlprofilen, insbesondere Hohlprofilen und/oder Strangprofilen, zusammengebaut ist.

15. Gestell nach einem der Ansprüche 1 bis 14,
**dadurch gekennzeichnet,**
**dass** das Oberteil (05) aus mehreren vormontierten, insbesondere zusammengeschweißten Oberteilmodulen durch Montage von geeigneten Montageverbindungen, insbesondere Schraubverbindungen, zusammensetzbar ist.

16. Gestell nach Anspruch 15,
**dadurch gekennzeichnet,**
**dass** die einzelnen Oberteilmodule in einem Container und/oder auf der Ladefläche eines Lastkraftwagens transportierbar sind.

17. Gestell nach einem der Ansprüche 1 bis 18,
**dadurch gekennzeichnet,**
**dass** das Unterteil (06) auf einem, insbesondere mit Stahlelementen armierten, Betonfundament (03) befestigt ist.

18. Gestell nach einem der Ansprüche 1 bis 17,
**dadurch gekennzeichnet,**
**dass** die Solarmodule (04) mit einem Neigungswinkel im Bereich von 15° bis 35°, insbesondere im Bereich von 20° bis 30°, auf dem Gestell (01) befestigt sind.

19. Gestell nach einem der Ansprüche 1 bis 18,
**dadurch gekennzeichnet,**
**dass** der Neigungswinkel der Solarmodule auf dem Oberteil veränderbar ist.

20. Gestell nach einem der Ansprüche 1 bis 19,
**dadurch gekennzeichnet,**
**dass** auf dem Gestell (01) Solarmodule (04) mit einer Gesamtfläche von mehr als 100 m², insbesondere mit einer Gesamtfläche von mehr als 200 m², montiert sind.

21. Gestell nach einem der Ansprüche 1 bis 20,
**dadurch gekennzeichnet,**
**dass** der Antriebsmotor (12, 13) von einer Steuerungseinrichtung in Abhängigkeit der Signale einer Zeitmesseinrichtung, insbesondere einer Funkuhr, angesteuert wird.

22. Gestell nach einem der Ansprüche 1 bis 21,
**dadurch gekennzeichnet,**
**dass** zur Kalibrierung der Steuerung am Unterteil (06) oder am Oberteil (05) zumindest ein Sensor, insbesondere ein mechanischer Endschalter, vorgesehen ist, mit dem die Relativstellung zwischen Oberteil (05) und Unterteil (06) in einer Winkelposition feststellbar ist.

23. Gestell nach einem der Ansprüche 1 bis 22,
**dadurch gekennzeichnet,**
**dass** die Bauteile des Gestells (01) mit einem Korrosionsschutz, insbesondere mit einer im Tauchbad hergestellten Vollverzinkung oder einer Feuerverzinkung, ausgestattet sind.
